# EUROPEAN PATENT SPECIFICATION

(11) **EP 2 488 708 B1**
(45) Date of publication and mention of the grant of the patent: **03.07.2013**
(21) Application number: 09753165.1
(22) Date of filing: 14.10.2009
(51) Int. Cl.: E04C 5/06, E04C 5/16

(54) **COMPONENT FOR USE IN THE PRODUCTION OF A CONCRETE FLOOR PLATE**
KOMPONENTE ZUR HERSTELLUNG EINER BETONBODENPLATTE
COMPOSANT À UTILISER DANS LA FABRICATION DE PLAQUE DE PLANCHER EN BÉTON

(43) Date of publication of application: 22.08.2012
(73) Proprietor: Hy-Ten Limited, Richmond, Surrey TW9 1PX (GB)
(72) Inventor: WEBSTER, Richard, Cheshire CH64 9RE (GB)
(74) Representative: Franks & Co Limited
(86) International application number: PCT/GB2009/002452
(87) International publication number: WO 2011/045552

(56) References cited:
- EP-A1- 0 744 508
- EP-A1- 1 450 090
- DE-A1- 19 653 077
- DE-U1-202009 004 312
- GB-A- 508 002
- US-A- 2 896 887
- US-A- 6 161 360
- US-A1- 2004 099 785

## Description

### Field of the Invention

This invention relates to a stud rail dip for use in performing the assembly of a stud to a rail and to a kit of parts for performing such assembly.

### Background of the Invention

Stud rails are widely used components in the production of concrete floor plates, such floor plates being used extensively in the construction of multi-storey buildings. It is widely known that concrete floor plates supported on columns experience a punching shear which may result in cracking of the floor/penetration of the column into the floor plate. These highly stressed areas need a complex internal arrangement of reinforcing to spread the forces around the perimeter of the column. The problem is well understood in the reinforced concrete construction industry and all the major suppliers have their own shear solution systems. These include stirrups, closed links, hooks, bent up bars, shear ladders, double headed studs, stud rails and shear heads, stud rails being the most cost effective and therefore most widely used.

EP 0744508 A1 discloses a clip according to the preamble of claim 1.

Basically, most if not all prior art systems comprise a double headed rod tying the lower and upper layers of the slab together welded to a metal rail serving as a carrier for a row of studs at predetermined spaced apart locations, and sometimes additionally serving as a head on the rod, but its main purpose is to pitch the rods and create a single assembly for easy positioning in situ and attachment to re-bar.

As an alternative to a metal rail, it is believed that a plastics rail system also exists, with the ladder pre-formed, at spaced apart locations, whereby a stud may be positioned, where required, along the ladder.

### Object of the Invention

A basic object of the invention is the provision of an improved clip for the assembly of a stud rail and a kit of parts to perform such assembly

### Summary of a First Aspect of the Invention

According to a first aspect of the invention, of independent significance, there is provided a clip according to claim 1.

### Summary of a Second Aspect of the Invention

According to a second aspect of the invention, of independent significance, there is provided a kit of parts according to claim 10.

### Advantages of the Invention

By using the clips of the first aspect and the kit of parts in accordance with the second aspect, the need for welding is eliminated and there is provided the highly advantageous option of assembling stud rails, on site, by hand, with the capability of extensive flexibility of the stud spacing, length, and diameter, whilst meeting engineer's specification and building regulations, in contrast to most, if not to all, prior art systems known in practice which involve delivery to site of fabricated stud rails with studs of predetermined length and diameter and already positioned at predetermined locations, which may or may not be the optimum stud dimensions and spacing for the concrete floor plate being produced. The advantageous possibility for on-site assembly does not of course preclude off-site assembly if this is found more beneficial or suitable for a particular installation. In addition, by avoiding bespoke stud rails and employing mass production techniques for the method and kit of parts of the invention, considerable cost savings can be achieved compared with prior art systems. Furthermore, the construction critical path is simplified in that the time drag of ordering and awaiting manufacture and just-in-time delivery to site of bespoke stud rails is totally avoided.

### Preferred or Optional Features of the First Aspect of the Invention

The clip is of skeleton structure.

The clip is of synthetic plastics, and thereby corrosion resilient.

The clip is of spring steel, preferably stainless steel and thereby corrosion resilient.

The clip is a sheet metal pressing manufactured in progression tooling.

The pair of projections comprise a pair of opposed mounting arms terminating in downwardly hooked ends, whereby each clip and stud unit may be hooked over the tops of a pair of circular section, parallel supports, whereby the clip and stud units are mounted on the parallel supports, to form a stud rail.

The hooked ends are provided with arcuate engagement surfaces.

The pair of projections incorporate latching means to ensure that the projections cannot be readily disengaged from the parallel supports, whereby the studs may either project upwardly or may hang downwardly.

The parallel supports are adapted to radiate from a spacer coaxial with the column.

### Description of the Drawings

The various aspects of the invention will now be described in greater detail, by way of examples, with reference to the accompanying drawings, in which:-
Figure 1 is a perspective view of a first embodiment of clip in an inverted condition ready to receive one end of a double-headed stud;
Figure 2 is a plan view of Figure 1;
Figure 3 is a side elevation of Figure 2;
Figure 4 is an end elevation of Figure 2;
Figure 5 is an underneath plan of Figure 1;
Figure 6 is a perspective view of a second embodiment of clip, that is clipped to a stud;
Figure 7 shows examples of studs for use with various embodiments of clips.
Figures 8A, 8B and 8C are respectively a top plan, a front elevation and a perspective view from below, of a third embodiment of clip;
Figure 8D is a perspective view from above showing a clip of Figures 8A to 8C clipped to an upper end of a stud, with this clip, in turn, clipped on to two adjacent rungs of a prefabricated wire ladder, and which is itself supported on a conventional re-bar grid;
Figure 8E is a perspective view from below of a portion of Figure 8D;
Figures 9A, 9B and 9C are respectively a top plan, a side elevation and a perspective view from below, of a fourth embodiment of clip;
Figure 9D is a perspective view from above showing a clip of Figures 9A to 9C clipped to an upper end of a stud, with this clip, in turn, clipped on to two adjacent rungs of a prefabricated wire ladder, which is itself supported on a conventional re-bar grid, and
Figure 9E is a perspective view from below of a portion of Figure 9D.
The first embodiment (Figures 1 to 5) is a clip according to the claimed invention. The second, third and fourth embodiment do however not form part of the claimed invention.

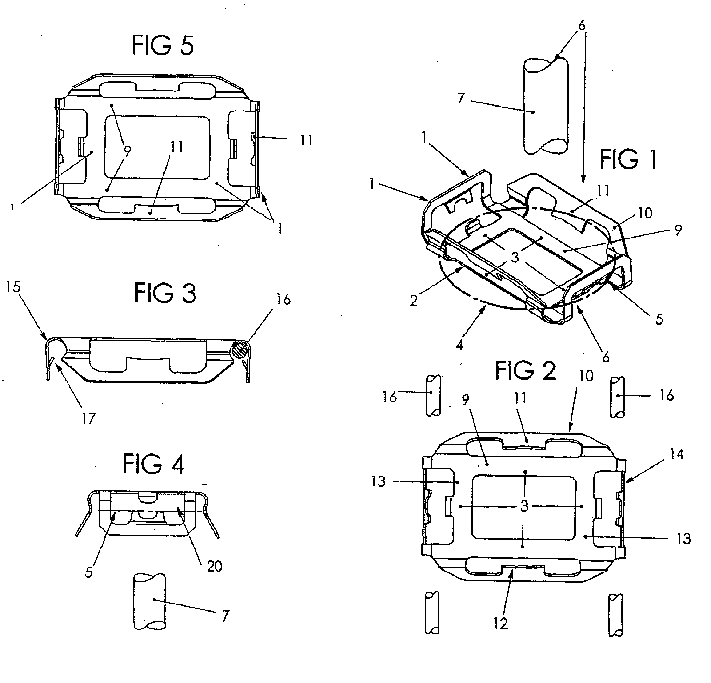

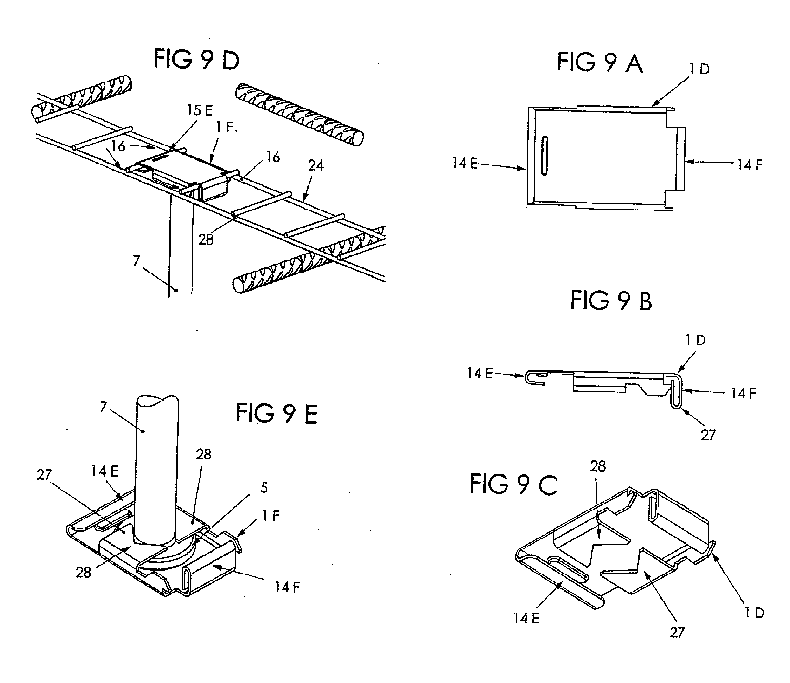

In the embodiment of Figures 1-5, a clip 1, is blanked and pressed from annealed carbon steel strip subsequently austempered to the skeletal shape indicated and comprises a body member 2 providing a planar support surface 3 adapted, in use, to be engaged by a planar end surface 4 of one head 5 of a double-headed stud 6, examples of which are best seen in Figure 9, being produced by hot, upset forging from a suitably cut length of industry-standard re-bar, a shank 7 of the stud extending to its other head 8.

From each parallel edge strip 9 of the body member 2 projects an integral arm 10 carrying centrally a resilient tab 11, the tabs 11 of each arm 10 being splayed apart by the push-fitting of the head 5 but returning to their neutral position illustrated in Figures 1-5 after passage of the head 5, with terminal ends 12 of the tabs being formed with a concave recess to engage the shank 7, and also engage the underside or annulus of the head 5 to latch the stud 6 to the clip 1A to form a clip and stud unit.

From each parallel side strip 13 of the body member 2 projects an integral, and generally U-shaped arm 14 providing a hooked end 15 adapted to be fitted over a pair of parallel, circular section support bars 16, preferably re-bars, partially shown in Figure 2, located in a horizontal plane P and one only shown in Figure 3, and latched to the support bars 16 by a resilient tab 17 of each arm 14 engaging the underside of each support bar 16, so that head 5 associated with the clip 1, is located between the parallel bars 16 and within the plane P.

Clip and stud units are located, again as a push-fit, by splaying the resilient tabs 17 to latch the clip and stud units to the support rods 16, with location of the clip and stud units being at suitable pitch along the support rods 16 to suit the floor plate to be cast, and to thus provide a stud rail capable of on-site assembly.

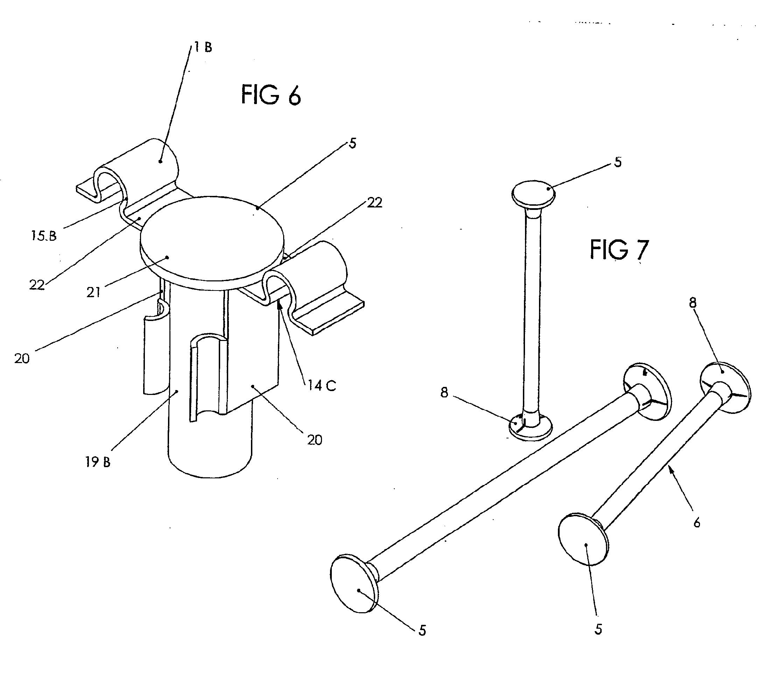

In the embodiment of Figure 6, like reference numerals are employed in like components, but with a "B" suffix. A clip 1 B has an aperture 18 with a flared mouth 19B defined between two spaced-apart walls 20 to receive a portion of the shank 7 of a stud adjacent a head 5, with the annulus face 21 of the head 5 seating on upper surfaces 22 of the clip 1 B. Also shown in Figure 6 are arms 14B, with arcuately apertured or hooked ends 15B to snap onto bars 16.

Figure 7 simply shows three forged studs 6.

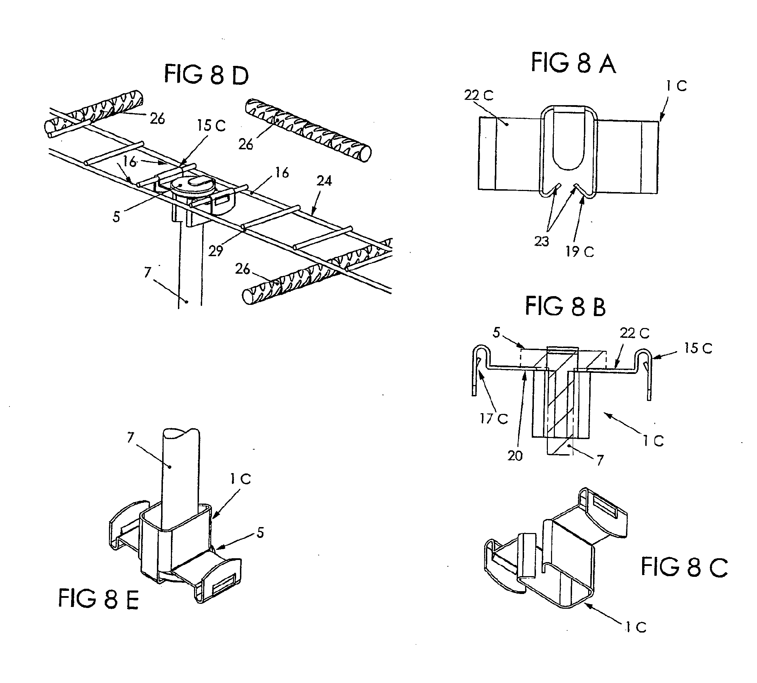

In the embodiment of Figures 8A to 8E, a clip 1C has a flared mouth 19C (Figure 9A) defined by a pair of spaced-apart, inturned, resilient tabs 23, which are splayed further apart during manual insertion of the stem 7 of a stud 6 with the clip 1C, with annulus face 20 of the head 5 again seating on upper surfaces 22D. Figure 9D shows a clip and stud unit fitted across rungs 24 of a ladder 25, with parts of a conventional re-bar lattice indicated at 26, and Figure 9E shows the underside of a clip and stud unit.

In the embodiment of Figures 10A to 10E, clip 1D has a mouth to receive a portion of the shank 7 of a stud 6 defined by two U-shaped notches 27 formed in resilient tabs 28, which also serve to support and suspend the stud 6 when the clip and stud unit has been fitted to the ladder to form a stud rail 29, the tabs 28 being lifted by a simple tool such as a screwdriver to achieve insertion of a head 5 of a stud 6 into the clip 1D.

In this embodiment, arms being asymmetrical, one arm 14E hooking over a circular section rung of the ladder, and the other arm 14F having an orthogonal flange 27 to engage an adjacent rung.

## Claims

1. A clip (1) for use in mounting a double-headed reinforcing stud (6) at a user-selected position along a pair of circular cross section, parallel supports (16), such as re-bar, the clip comprising a generally planar base (3) , said clip being **characterised in that** said base is carrying a pair of spaced-apart, resilient deformable tabs (11) aligned in a first direction, by which tabs (11) the clip (1) and stud (6) may be latched together to form a clip and stud unit, and **in that** said base (3) is also carrying a pair of projections (14) aligned in a second direction that is orthogonal with respect to the first direction, each of which projections (14) is adapted to be engaged with one of the parallel supports (16) at a user-selected position, to form the stud rail, wherein both the tabs (11) and the projections (14) are situated at the same side of the base (3), wherein two pairs of flanges (10, 14) project from the same side of the base (3), being a first pair of flanges (10) carrying the tabs (11), which tabs (11) are so spaced-apart that an end of a double-headed stud (6) may deform one or both tabs (11) when a head (5) of said stud (6) enters a receiving aperture of the clip (1) such that the tabs (11) engage a portion of the head (5) to latch the clip (1) and stud (6) together as a unit, and a second pair of flanges consisting of said pair of projections (14), being aligned orthogonally to the first pair and being so spaced apart that each can engage one of the parallel supports at a user-selected position, to form the stud rail and wherein the flanges (10, 14) of each of said two pairs of flanges face each other and delimit, together with the generally planar base (3), a free space for receiving the head (5) of the double-headed stud (6) and also a part of each of said two parallel supports (16), in such a way that the head (5) of the stud (6) is located in between said two parallel supports (16) and is located substantially in the plane (20) defined by said two parallel supports (16).

2. A clip (1) as claimed in claim 1, wherein a head (5) of the stud (6) is employed to displace one or both resilient tabs (11), with the tabs (11) engaging a rear surface (4) of the head (5) to latch the clip (1) and stud (6) together, as a unit.

3. A clip as claimed in claim 1 or claim 2, of skeletal structure.

4. A clip as claimed in any one of claims 1 to 3, of synthetic plastics, and thereby corrosion resilient.

5. A clip as claimed in any one of claims 1 to 4, of spring steel, preferably stainless steel and thereby corrosion resilient.

6. A clip as claimed in claim 5, being a sheet metal pressing manufactured in progression tooling.

7. A clip as claimed in any one of claims 1 to 6, wherein the pair of projections (14) comprise a pair of opposed mounting arms terminating in downwardly hooked ends, whereby each clip and stud unit may be hooked over the tops of a pair of circular section, parallel supports (16), whereby the clip and stud units are mountable on the parallel supports (16), to form a stud rail.

8. A clip as claimed in claim 7, wherein the hooked ends are provided with arcuate engagement surfaces.

9. A clip as claimed in claims 7 or 8, wherein the pair of projections (14) incorporate latching means (17) to ensure that the projections (14) cannot be readily disengaged from the parallel supports (16), whereby the studs (6) may either project upwardly or may hang downwardly.

10. A kit of parts for the manual assembly of a stud rail (29), comprising:
a plurality of double-headed studs (6);
a plurality of clips (1) as defined in any one of claims 1 to 9; and
elongate supports (16) of circular section, such as re-bar, with a pair of supports adapted to be located in spaced-apart, parallel disposition, with a plurality of clip and stud units engaged with the pair of parallel supports (16), at longitudinally spared-apart selected locations along the parallel supports, to form a stud rail (29).

11. A kit of parts as claimed in claim 10, wherein the two parallel supports (16) are of wire, rod, beams or re-bar, preferably self-supporting wire, rods, beams or re-bar.

12. A kit of parts as claimed in claim 11, wherein the wires, rods or beams are of steel wire, preferably stainless steel.

13. A kit of parts as claimed in any one of claims 10 to 12, wherein the two parallel supports (16) form part of a ladder (25).

14. Kit of parts as claimed in claim 13, wherein the two parallel supports (16) are either the stiles or the rungs (24).

15. A kit of parts as claimed in claim 13 or claim 14, wherein the ladder (25) is prefabricated in wire, rod, or re-bar, preferably self-supporting, preferably of steel, preferably of stainless steel.

16. A kit of parts as claimed in any one of claims 10 to 15, wherein each stud (6) comprises a shank terminating at each end in an integral head (5), preferably hot forged.

17. A kit of parts as claimed in claim 16, wherein the studs (6) are constructed from cut lengths of industry-standard re-bar.

18. A kit of parts as claimed in claim 16 or claim 17, wherein a range of studs (6) of heights 50-1000mm to suit the thickness of floor plates being cast, and a range of shank diameters, are provided.

## Patentansprüche

1. Eine Klemme (1) zur Verwendung bei Montage eines Zweikopfverstärkenden Bolzens (6), in einer vom Benutzer gewählten Position entlang eines Paares von kreisförmigen Querschnitt, parallelen Träger (16), wie ein Re-stab, die Klemme umfassend eine im wesentlichen ebene Basis (3), die Klemme **gekennzeichnet durch** das dass die Basis ein Paar von beabstanden, elastischen Laschen (11) trägt, in einer ersten Richtung verbunden geworden, wodurch die Laschen (11), die Klemme (1) und der Bolzen (6) miteinander verriegelt werden können, um ein Teil aus der Klemme und dem Bolzen zu bilden, und **durch** das dass die Basis (3) auch ein Paar von Vorsprüngen (14) trägt, in einer zweiten Richtung verbunden werden, die orthogonal zu der ersten Richtung ist, jede von den Vorsprüngen (14) angepasst ist, mit einem von den parallelen Trägern (16) angestellt zu werden, in einer vom Benutzer gewählten Position, um eine Bolzenreiling zu bilden, wobei beide Laschen (11) und die Vorsprüngen (14) an derselben Seite der Basis (3) sich erstrecken, wobei zwei Paare von Flanschen (10, 14)sich vor derselben Seite der Basis (3) erstrecken, wobei ein erstes Paar von Flanschen (10) tragenden die Laschen (11), die Laschen so beabstandet sind, dass ein Ende eines Zweikopf Bolzens (6) eine oder beide von den Laschen (11) verformen kann, als ein Kopf (5) des Bolzens (6) eine Aufnahmeöffnung der Klemme (1) eingibt so dass die Laschen (11) ein Teil des Kopfes (5) anstellen, um die Klemme (1) und den Bolzen als ein Teil zusammenzukapieren, und ein zweites Paar von Flanschen umfassend das Paar von Vorsprüngen (14), die orthogonal zu dem ersten Paar verbunden sind und so beabstandet sind, dass jede eine von den parallelen Trägern anstellen kann in einer vom Benutzer gewählten Position, um die Bolzenreiling zu bilden und wobei die Flanschen (10, 14) von jeden der beiden Paare der Flanschen gegenüber sind und abgrenzen, zusammen mit mit der im wesentlichen ebenen Basis (3), einen freien Raum um den Kopf (5) des Zweikopf Bolzens (6) und auch ein Teil von den zwei parallelen Trägern (16) aufzunehmen, so dass der Kopf (5) des Bolzens (6) sich zwischen den zweien parallelen Trägern (16) erstreckt und sich im wesentlichen in der Ebene (20) erstreckt, die mit den zweien parallelen Trägern (16).

2. Eine Klemme (1) nach Anspruch 1, wobei ein Kopf (5) des Bolzens (6) angesetzt ist, um eine oder beide elastischen Laschen (11) zu verschieben, die Laschen (11) eine hintere Oberfläche des Kopfes (5) anstellend, um die Klemme (1) und den Bolzen (6) zusammenzukapieren, als ein Teil.

3. Eine Klemme (1) nach Anspruch 1 oder Anspruch 2, von einer Skelettstruktur.

4. Eine Klemme nach einem der Ansprüche 1 bis 3, aus Kunstoffmaterial und dadurch Korrosion widerstandsfähig.

5. Eine Klemme nach einem der Ansprüche 1 bis 4, aus Federstahl, vorzugsweise aus Edelstahl und dadurch Korrosion widerstandsfähig.

6. Eine Klemme nach Anspruch 5, die ein Blecheindrücken ist, in einem Progression Werkzeugbereitstellung hergestellt.

7. Eine Klemme nach einem der Ansprüche 1 bis 6, wobei das Paar von Vorsprüngen (14) ein Paar von gegenüberliegenden Haltarmen umfasst, das in abwärtshakenförmigen Enden endet, wobei jedes Klemme- und Bolzen-Teil über den Spitzen eines Paares von kreisförmigen Querschnitt eingehängt werden kann, parallel Träger (16), wobei das Klemme- und Bolzen -Teile auf den parallelen Trägern (16) montbare sind, um eine Bolzenreiling zu bauen.

8. Eine Klemme nach Anspruch 7, wobei die hakenförmige Ende mit bogenförmigen Eingriffsflächen versehen sind.

9. Eine Klemme nach Anspruch 7 oder 8, wobei das Paar von Vorsprüngen (14) ein Kapiersmittel (17) umfasst, um zu bewirken, dass die Vorsprüngen (14) nicht von den parallelen Trägern (16) abgezogen werden können, wobei der Bolzen (6) sich entweder nach oben erstrecken oder nach unten hängen kann.

10. Ein Satz von Teilen für manuelle Montage der Bolzenreiling (29), umfassend:
eine Vielzahl von Zweikopf-Bolzen (6);
eine Vielzahl von Klemmen (1) wie in einem der Ansprüche 1 bis 9 definiert ist;
längliche Träger (16) des kreisförmigen Teiles (16), wie ein Re-stab, mit einem Paar von Trägern, die angepasst sind, in einer beabstanden, parallelen Anordnung sich zu erstrecken, mit einer Vielzahl von Klemmen-und Bolzen-Teilen, die mit einem Paar von parallelen Trägern (16) angestellt sind, in longitudinalen beabstanden gewählten Positionen entlang der parallelen Träger, um die Bolzenreiling (29) zu bilden.

11. Ein Satz von Teilen nach Anspruch 10, wobei die zwei parallele Träger(16) aus Draht, Stab, Balken oder Re-stab, vorzugsweise aus selbsttragenden Draht, Stäben, Balken oder Re-stab.

12. Ein Satz von Teilen nach Anspruch 11, wobei die Drähte, Stäbe oder Balken sind aus Stahldraht, vorzugsweise aus Edelstahl.

13. c wobei die zwei parallele Träger (16) ein Teil einer Leiter (25) bilden.

14. Ein Satz von Teilen nach Anspruch 13, wobei die zwei parallele Träger (16) entweder die Stile oder die Sprossen (24) sind.

15. Ein Satz von Teilen nach Anspruch 13 oder Anspruch 14, wobei die Leiter (25) aus Draht, Stab oder Re-stab gefertigt ist, vorzugsweise selbsttragende, vorzugsweise aus Stahl, vorzugsweise aus Edestahl.

16. Ein Satz von Teilen nach einem der Ansprüche 10 bis 15, wobei jeder Bolzen (6) einen Schaft, der an jedem Ende in einem integralen Kopf (5) endet, vorzugsweise heiß geschmiedeten, umfasst.

17. Ein Satz von Teilen nach Anspruch 16, wobei die Bolzen (6) aus Schnittlängen von Industrie-Standard-Re-stab aufgebaut sind.

18. Ein Satz von Teilen nach Anspruch 16 oder Anspruch 17, wobei eine Reihe von Bolzen (6) von Höhe 50-1000 mm, der Dicke der gegossenen Bodenplatten entsprechenden, und eine Reihe von Schaftdurchmessen vorgesehen sind.

## Revendications

1. Clip (1) utilisable pour le montage d'un goujon de renfort à double tête (6) au niveau d'une position sélectionnée par un usager le long d'une paire de soutiens parallèles (16) ayant une section en coupe circulaire, tels que des barres d'armature, le clip comprenant une base généralement plane (3), le clip étant **caractérisé en ce que** ladite base porte une paire d'onglets élastiques déformables (11) distincts l'un de l'autre qui sont alignés selon une première direction, au moyen desquels onglets (11) le clip (1) et le goujon (6) peuvent être verrouillés ensemble pour former une unité clip et goujon, et **en ce que** ladite base porte également une paire de projections (14) sont alignées selon une deuxième direction orthogonale par rapport à la première direction, chacune des projections (14) étant adaptée à être engagée avec un des soutiens parallèles (16) au niveau d'une position sélectionnée par un usager, pour former un rail à goujons, dans lequel les onglets (11) et les projections (14) sont situés du même côté de la base (3), dans lequel deux paires d'épaulements (10, 14) projettent depuis le même côté de la base (3), consistant d'une première paire d'épaulements (10) qui portent les onglets (11), les onglets (11) étant distants l'un de l'autre de telle sorte qu'une extrémité d'un goujon de renfort à double tête (6) puisse déformer l'un ou les deux onglets (11) lorsqu'une tête (5) dudit goujon (6) pénètre dans un orifice de réception du clip (1) de sorte que les onglets (11) engagent une portion de la tête (5) pour verrouiller le clip (1) et le goujon (6) ensemble comme une unité, et d'une deuxième paire d'épaulements consistant de ladite paire de projections (14), étant alignées orthogonalement par rapport à la première paire et étant distantes de sorte que chacune peut engager l'un des soutiens parallèles au niveau d'une position sélectionnée par un usager, pour former le rail à goujons, et dans lequel les épaulements (10, 14) de chacune desdites deux paires d'épaulements se font face et délimitent, de concert avec la base essentiellement plane (3), un espace libre pour recevoir la tête (5) du goujon à double tête (6) et également une part de chacun desdits deux soutiens parallèles (16), de sorte que la tête (5) du goujon (6) soit située entre lesdits deux soutiens parallèles (16) et soit située essentiellement dans le plan (20) défini par lesdits deux soutiens parallèles (16).

2. Clip selon la revendication 1, dans lequel une tête (5) du goujon (6) est utilisée pour déplacer l'un ou les deux onglets élastiques (11), avec les onglets (11) engageant une surface antérieure (4) de la tête (5) pour verrouiller le clip (1) et le goujon (6) ensemble, comme une unité.

3. Clip selon la revendication 1 ou la revendication 2, dont la structure est squelettique.

4. Clip selon l'une des revendications 1 à 3, composé de plastiques synthétiques et donc résistant à la corrosion.

5. Clip selon l'une des revendications 1 à 3, composé d'acier à ressorts, de préférence d'acier inoxydable et donc résistant à la corrosion.

6. Clip selon la revendication 5, étant un emboutissage de tôle en feuille fabriqué par usinage en progression.

7. Clip selon l'une des revendications 1 à 6, dans lequel la paire de projections (14) comprend une paire de bras de montage opposés qui se terminent par des extrémités crochues vers le bas, de sorte que chaque unité clip et goujon puisse être accrochée par-dessus les sommets d'une paire de soutiens parallèles (16) ayant une section en coupe circulaire, les unités clip et goujon pouvant être montées sur les soutiens parallèles (16) pour former un rail à goujons.

8. Clip selon la revendication 7, dans lequel les extrémités crochues sont fournies avec des surfaces d'engagement arquées.

9. Clip selon la revendication 7 ou 8, dans lequel la paire de projections (14) incorpore des moyens de verrouillage (17) pour assurer que les projections (14) ne puissent être facilement désengagées des soutiens parallèles (16), de sorte que les goujons (6) puissent projeter vers le haut ou pendre vers le bas.

10. Ensemble de pièces pour l'assemblage manuel d'un rail à goujons(29), comprenant:
une pluralité de goujons à double tête (6);
une pluralité de clips définis selon l'une parmi les revendications 1 à 9 ; et
des soutiens allongés (16) ayant une section en coupe circulaire, tels que des barres d'armature, avec une paire de soutiens adaptés pour être disposés de façon parallèle et distante, avec une pluralité d'unités clip et goujon engagées avec la paire de soutiens parallèles (16) à des endroits sélectionnés longitudinalement distants les uns des autres le long des soutiens parallèles, pour former un rail à goujons (29).

11. Ensemble de pièces selon la revendication 10, dans lequel les deux soutiens parallèles (16) sont faits de fil machine, barreau, poutre ou barre d'armature, de préférence fil machine, barreau, poutre ou barre d'armature de type autoportant.

12. Ensemble de pièces selon la revendication 11, dans lequel les fils machine, barreaux, poutres ou barres d'armature sont faits d'acier, préférablement d'acier inoxydable.

13. Ensemble de pièces selon l'une des revendications 10 à 12, dans lequel les deux soutiens parallèles (16) font partie d'une échelle (25).

14. Ensemble de pièces selon la revendication 13, dans lequel les deux soutiens parallèles (16) sont soit les montants, soit les échelons (24).

15. Ensemble de pièces selon la revendication 13 ou la revendication 14, dans lequel l'échelle (25) est préfabriquée en fil machine, barreau ou barre d'armature, de préférence de type autoportant, de préférence en acier, de préférence en acier inoxydable.

16. Ensemble de pièces selon l'une des revendications 10 à 15, dans lequel chaque goujon (6) comprend une tige se terminant à chaque extrémité par une tête intégrale (5), de préférence forgée à chaud.

17. Ensemble de pièces selon la revendication 16, dans lequel les goujons (6) sont construits à partir de longueurs coupées de barre d'armature selon norme industrielle.

18. Ensemble de pièces selon la revendication 16 ou la revendication 17, dans lequel une gamme de goujons (6) de hauteurs entre 50 et 1000 mm pour convenir à l'épaisseur de plaques de plancher en course de coulage, et une gamme de diamètres de tige, sont fournis.
